# EUROPEAN PATENT APPLICATION

(11) **EP 3 677 322 A1**
(43) Date of publication of application: **08.07.2020**
(21) Application number: 18851267.7
(22) Date of filing: 21.08.2018
(51) Int. Cl.: A63F 13/52

(54) **VIRTUAL SCENE DISPLAY METHOD AND DEVICE, AND STORAGE MEDIUM**

(30) Priority: 31.08.2017 CN 201710770774
(71) Applicant: Tencent Technology (Shenzhen) Company Limited, Shenzhen, Guangdong 518057 (CN)
(72) Inventor: YUAN, Jiaping, Shenzhen City Guangdong 518057 (CN)
(74) Representative: AWA Sweden AB
(86) International application number: PCT/CN2018/101451
(87) International publication number: WO 2019/042183

(57) **Abstract**

A virtual scene display method and device, and a computer readable storage medium. The method comprises: acquiring animation data and video data; displaying an animation interface corresponding to the animation data in an animation display area of a display interface, the animation interface comprising a first virtual scene consisting of multiple animation elements; and playing a video clip in the video data in response to operations on the animation elements in the animation interface, the video clip showing a picture transitioning from the first virtual scene to a second virtual scene.

## Description

### RELATED APPLICATION

The application claims priority to China Patent Application No. 201710770774.6, filed with National Intellectual Property Administration, PRC on August 31, 2017 and entitled "VIRTUAL SCENE DISPLAY METHOD OF SIMULATING MOVEMENTS OF A LENS, APPARATUS, AND ELECTRONIC DEVICE", both of which are incorporated herein by reference in their entirety.

### FIELD OF THE TECHNOLOGY

This application relates to Internet technologies, and particularly, to a virtual scene display method and apparatus, and a storage medium.

### BACKGROUND OF THE DISCLOSURE

In a webpage or an application which requires displaying an animation, independent scenes are usually involved. A scene may be images depicting a continuous event or images depicting a series of continuous actions. According to a conventional mechanism, the transition from a scene to another scene is generally implemented by changing locations of components on multiple image layers at the same time, under the control of a program script, to simulate the switching of scenes resulted from lens movement.

### SUMMARY

To resolve a problem in the existing technology that simulating lens movement in a virtual scene may affect the performances of intelligent devices and result in screen stuttering, embodiments of this application provide method of switching between virtual scenes.

An embodiment of this application provides a virtual scene display method. The method includes:
obtaining animation data and video data;
displaying an animation interface corresponding to the animation data in an animation display area of a display interface, the animation interface includes a first virtual scene composed of a plurality of animation elements; and
playing a video clip in the video data in response to an operation on an animation element in the animation interface, the video clip includes images depicting a transition from the first virtual scene to a second virtual scene.

An embodiment of this application provides a virtual scene display apparatus. The apparatus includes a processor and a memory, the memory stores computer-readable instructions executable by the processor to:
obtain animation data and video data;
display an animation interface corresponding to the animation data in an animation display area of a display interface, the animation interface includes a first virtual scene composed of a plurality of animation elements; and
play a video clip in the video data in response to an operation on an animation element in the animation interface, the video clip includes images depicting a transition from the first virtual scene to a second virtual scene.

An embodiment of this application provides a computer-readable storage medium. The computer-readable storage medium stores a computer program executable by a processor to implement the virtual scene display method of the embodiments.

In the embodiments of this application, images depicting a virtual scene and the transition between virtual scenes are processed to form a video. Animation effects simulating lens movement can be implemented by playing the video in a presented animation. As such, consumption of processing resources at a terminal device can be reduced, screen stuttering can be avoided. Further, production and modification of the animation can be simplified, and animation artists can focus on producing high-quality animation effects without worrying about the impacts of the animation on mobile phone performances.

### BRIEF DESCRIPTION OF THE DRAWINGS

FIG. 1-1 to FIG. 1-2 are schematic diagrams illustrating effects of a scene transition interface which simulate lens movement.
FIG. 2 is a schematic diagram illustrating a system according to an embodiment of this application.
FIG. 3 is a block diagram illustrating an apparatus according to an embodiment of this application.
FIG. 4A and FIG. 4B are flowcharts illustrating a virtual scene display method according to an embodiment of this application.
FIG. 5 is a schematic diagram illustrating the portal of a virtual scene entry interface according to an embodiment of this application.
FIG. 6 is a flowchart of a method implementing step S430 of FIG. 4B according to an embodiment of this application.
FIG. 7-1 to FIG. 7-3 are schematic diagrams illustrating transition effects simulating lens movement using an existing method.
FIG. 8 is a flowchart of a virtual scene display method based on the embodiment illustrated in FIG. 4B.
FIG. 9 is a schematic diagram illustrating a display interface of a video clip at a target location according to an embodiment of this application.
FIG. 10 is a flowchart of a detailed virtual scene display method according to an embodiment of this application.
FIG. 11 is a schematic diagram illustrating a video clip segmented at different locations based on scene movement requirements according to an embodiment of this application.
FIG. 12 is a block diagram illustrating a virtual scene display apparatus according to an embodiment of this application.
FIG. 13 is a block diagram illustrating an initial clip display module of the embodiment illustrated in FIG. 12.

### DESCRIPTION OF EMBODIMENTS

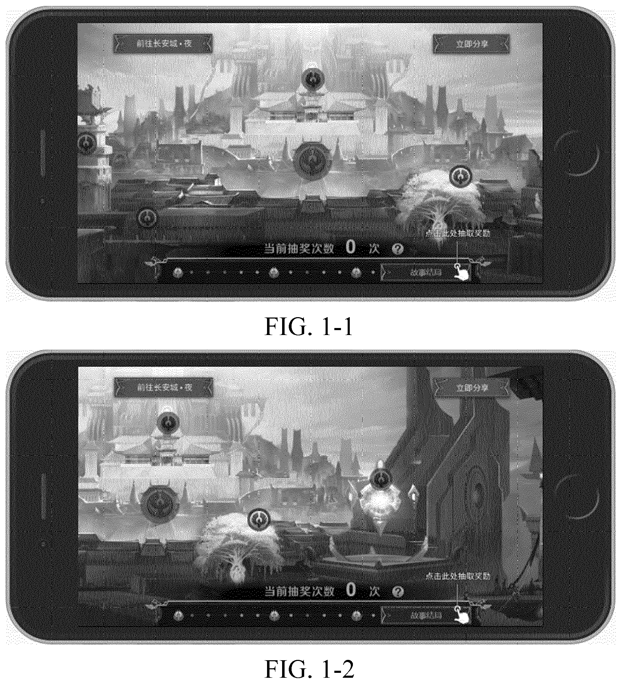

FIG. 1-1 to FIG. 1-2 are schematic diagrams illustrating effects of a scene transition interface which simulates lens movement. FIG. 1-1 and FIG. 1-2 are scene transition images simulating a rightward lens movement. Controlling components on multiple image layers to change positions at the same time using a program script consumes a large quantity of processing resources of the terminal and may cause screen stuttering.

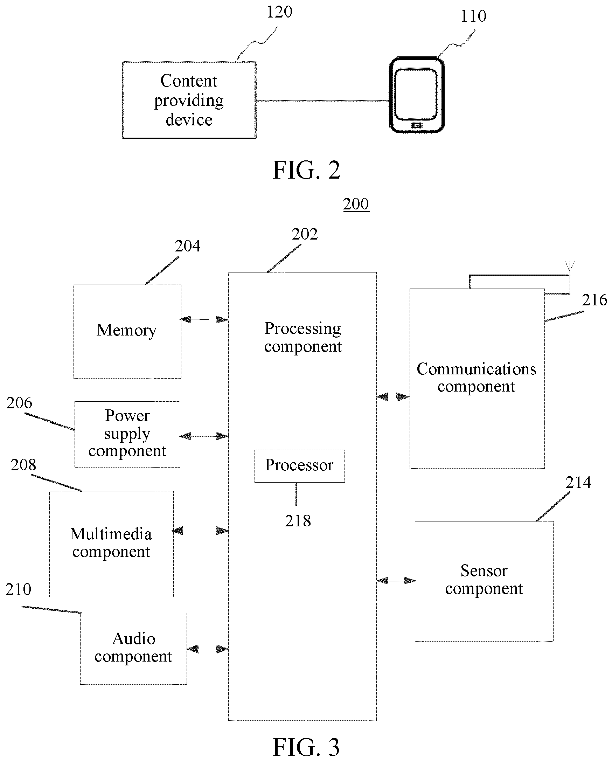

To improve the processing efficiency and image flow smoothness during a scene transition, in this embodiment of this application, animation display content is divided into a plurality of parts. A scene transition part is implemented by a video, and other parts are still implemented by animations. FIG. 2 is a schematic diagram illustrating a system according to an embodiment of this application. The system may include a terminal device 110 and at least one content providing device 120.

The content providing device 120 is a device providing display content to the terminal device 110. The display content may include a web page having animated display effects, web contents, game contents in a game APP, or the like. The content providing device 120 may be a website, a web game server, an online game server, or the like.

The terminal device 110 may be an electronic device that obtains contents through a network and presents the contents. The terminal device 110 may include, but not limited to, a mobile phone, a tablet computer, a notebook computer, a PC, a set top box, or the like. The terminal device 110 may obtain the display content from the content providing device 120 by running an application program and present the display content in a display device. The display device may be a screen, a display, a television, a projector, or the like of the terminal device 110. The application program in the terminal device 110 for obtaining and presenting contents may be various APPs including, but not limited to, a browser, a game software APP, or the like. For example, a game software APP is installed in the terminal device 110. After receiving a trigger action of the user for running the game software APP 120, the stored game software APP 120 may be called to perform the virtual scene display method of various embodiments.

FIG. 3 is a block diagram illustrating an apparatus 200 according to an embodiment of this application. For example, the apparatus 200 may be the terminal device 110 as shown in FIG. 2. The terminal device may be a mobile terminal, such as a smartphone, a tablet computer, or the like, or may be a non-portable terminal device such as a PC, a set top box, or the like.

Referring to FIG. 3, the apparatus 200 may include one or multiple of the following components: a processing component 202, a memory 204, a power supply component 206, a multimedia component 208, an audio component 210, a sensor component 214, and a communications component 216.

The processing component 202 controls the overall operations of the apparatus 200 and may include one or more processors 218 for executing instructions, to implement all or some of the steps of the methods.

The memory 204 stores various types of data, including instructions corresponding to the application program or method in the apparatus 200. The memory 204 may be implemented by a volatile or non-volatile storage device of any type or a combination thereof, e.g.,, a static random access memory (SRAM), an electrically erasable programmable read-only memory (EEPROM), an erasable programmable read only memory (EPROM), a programmable read-only memory (PROM), a read-only memory (ROM), a magnetic memory, a flash memory, a disk, or an optical disc.

In an exemplary embodiment, the apparatus 200 may be implemented by using one or multiple of an application-specific integrated circuit (ASIC), a digital signal processor, digital signal processing device, a programmable logic device, a field programmable gate array, a controller, a micro controller, a microprocessor, or other electronic element that is configured to perform the methods of the embodiments.

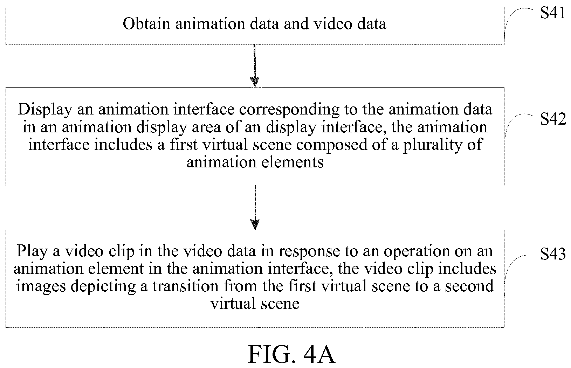

FIG. 4A is a flowchart illustrating a virtual scene display method according to an embodiment of this application. As shown in FIG. 4A, the method may include the following steps.

At step S41, animation data and video data may be obtained.

The animation data is data used for rendering an animation effect, and may include data describing animation elements and a motion logic. The animation data may be generated using an animation edition tool (such as Flash).

At step S42, an animation interface corresponding to the animation data may be displayed in an animation display area of a display interface, and may include a first virtual scene composed of a plurality of animation elements.

At step S43, a video clip in the video data may be played in response to an operation on an animation element in the animation interface, and images of the video clip depict the transition from the first virtual scene to a second virtual scene.

In this embodiment, the transition of virtual scenes is implemented by playing a video clip in the animation interface, not by moving the animation elements using the animation logic. As such, the processing resources required by the scene transition can be greatly reduced, so that the animation effects can be presented smoothly.

In some embodiments, the video data may include data of one or multiple video clips. When a video clip in the video data is played, a video clip position preset to be corresponding to the enter instruction may be obtained, and the video clip corresponding to the video clip location in the video data may be played. The video clip location may include a start position of the video clip in the video data. The position may be a time position or a frame position. For an operation triggering the scene transition, video data and a position of a video clip corresponding to the operation in the video data may be predefined. As such, when the operation is detected, the position of the video clip corresponding to the operation may be determined according to the predefined information.

For example, the video clip position may include a start time of the video clip in the video data. When the video clip is played, a time attribute of a video element in the display interface may be configured as the start time, so that the video element plays a video clip from a position corresponding to the start time in the video data. For example, the animation display area may be provided by a Canvas element of HTML5. The video element may be a Video element of HTML5. When a video is to be played to implement the transition of virtual scenes in an animation, a CurrentTime attribute of a Video element in the display interface may be set to be the start time of the video clip to be played, to enable the Video element to start playing the video clip from the start time in the video data, thereby implement the virtual scene transition.

In some embodiments, when the video data includes a plurality of video clips, different video clips in the video data may be played for various demands of animation presentation. For example, after a scene transition, an interactive element may be displayed along with the video clip to allow interactions with the user. For example, a second video clip corresponding to the second virtual scene in the video data may be played, and an interactive element may be superimposed onto a display area of the second video clip. In response to an operation on the interactive element, a third video clip corresponding to the interactive element in the video data may be played. Thus, dependence on the animation data can be further reduced, and thereby the consumption of processing resources of the terminal can be reduced. When no user operation is detected, the second video clip may be played repeatedly to wait for the user to issue an operation instruction. That is, in response to a determination that no operation is detected, the second video clip is played again with the interactive element superimposed when the second video clip is finished playing.

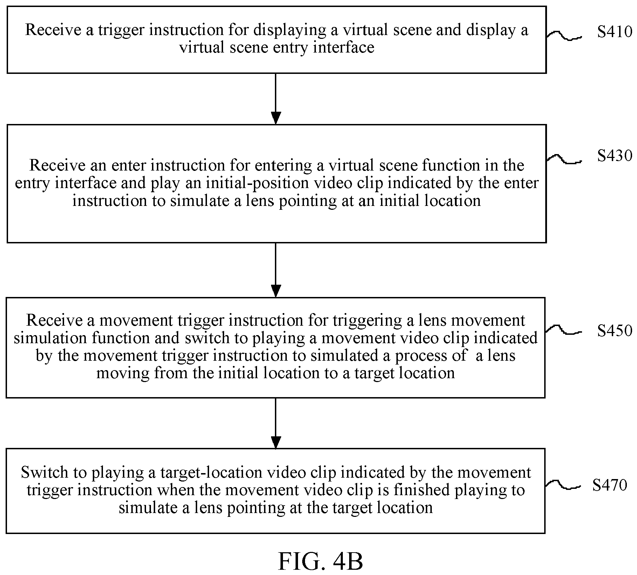

FIG. 4B is a flowchart illustrating a virtual scene display method according to an embodiment of this application. The virtual scene display method which simulates lens movement may be applicable to, or executable by, e.g., the terminal device 110 in the implementation environment as shown in FIG. 2. As shown in FIG. 4B, the virtual scene display method simulating lens movement may be performed by the terminal device 110 and may include the following steps.

At step S410, a trigger instruction for displaying a virtual scene may be received, and a virtual scene entry interface may be displayed.

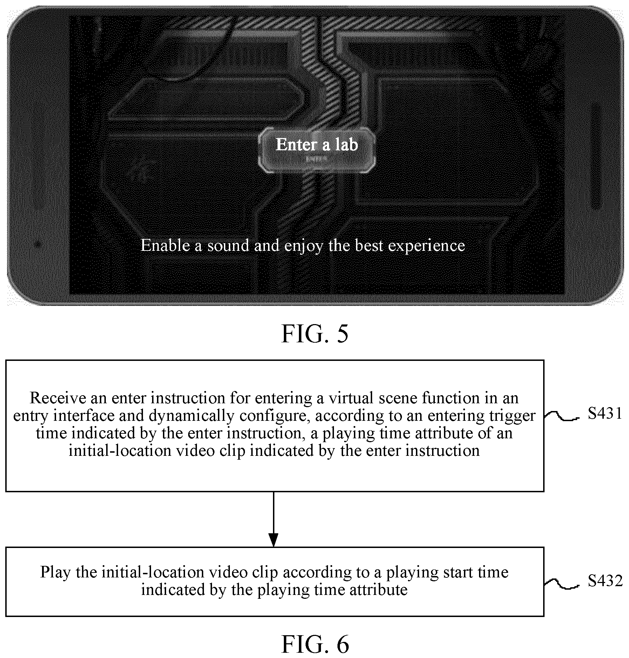

The virtual scene in various embodiments of this application may include a user interface part implemented by animation and a video part. After receiving the trigger instruction of the user for displaying the virtual scene, the terminal device 110 may run a game software application (APP) and display a virtual scene entry interface as shown in FIG. 5. The entry interface may use an animation effect and a logic information file generated by an animation edit tool such as Flash software, etc.. A control element for entering a virtual scene may be created, and displayed in the entry interface, such as the button labeled "enter a lab" as shown in FIG. 5.

At step S430, an enter instruction for entering a virtual scene function in the entry interface may be received and an initial-location video clip indicated by the instruction may be played to simulate a lens pointing at an initial location. That is, the displayed images are images depicting transition from the virtual scene of the entry interface to the virtual scene corresponding to the initial location.

For example, the user may click the button "enter a lab" in the entry interface as shown in FIG. 5. The terminal device 110 may receive the enter instruction for entering the virtual scene and switch to playing an initial-location video clip indicated by the enter instruction. Playing the initial-location video clip can simulate shooting a video using a lens pointing at the initial location. During playing the initial-location video clip, a movement trigger instruction of the user for triggering a lens movement simulation function may be awaited to be received. A movement control button may be arranged on a layer over the display interface of the initial-location video clip. When the movement control button is clicked by the user, the terminal device 110 may receive the movement trigger instruction for triggering the lens movement simulation function.

It should be noted that virtual scenes in a game may usually include scenes of a plurality of areas between which back-forth transitions may be provided, e.g., to simulate a lens moving from area 1 to area 2 and from area 2 back to area 1. For example, the initial location may mean that the simulated lens is pointing at area 1. After receiving the enter instruction which indicates a video clip corresponding to area 1, the terminal device may directly switch to playing a video clip corresponding to area 1 to simulate a video captured when the lens is pointing at area 1.

At step S450, a movement trigger instruction for triggering a lens movement simulation function may be received, and a movement video clip indicated by the movement trigger instruction may be played to simulate a process of a lens moving from the initial location to a target location. That is, the displayed images are images depicting the transition from the virtual scene corresponding to the initial location to a virtual scene corresponding to the target location.

It should be noted that the movement video clip may be images depicting a process of the simulated lens moving from area 1 to area 2 or may be images simulating a process of the lens moving from area 2 to area 3. That is, the movement video clip simulates images captured during the process of the lens moving from the initial location to the target location. Images for simulating movements between different areas may usually be different, and different movement trigger instructions may correspond to different movement video clips.

Images simulating the lens pointing at area 1, images simulating the lens moving from area 1 to area 2, and images simulating the lens pointing at area 2 may be compressed into a video in advance, and video start and end times simulating the lens pointing at area 1, video start and end times simulating the lens moving from area 1 to area 2, and video start and end times simulating the lens pointing at area 2 are respectively recorded.

Specifically, during the process of playing a video clip simulating the lens pointing at area 1 (i.e., the initial-location video clip), the terminal device 110 may wait for a movement trigger instruction triggered by a click of the user on the movement control key displayed over the layer of the video display interface. After receiving the movement trigger instruction, the terminal device 110 may play a video clip simulating the process of the lens moving from area 1 to area 2 (i.e., the movement video clip) indicated by the movement trigger instruction. The movement video clip is played to present the user visual effects of the lens moving slowly from area 1 to area 2.

At step S470, the terminal device may switch to playing a target-location video clip indicated by the movement trigger instruction when the movement video clip is finished playing, to simulate the lens pointing at the target location. That is, the displayed images are images depicting a virtual scene corresponding to the target location.

It should be noted that when the movement video clip is finished playing, it may be regarded that the lens has moved from area 1 to area 2, and images captured by the lens are of area 2. Therefore, when the movement video clip is finished playing, the terminal device may directly switch to playing the video clip corresponding to area 2 according to the movement trigger instruction. The pre-stored video clip corresponding to area 2 may be played to simulate a video captured when the lens is pointing at area 2.

Taking the application scenario as shown in FIG. 2 as an example, it is assumed the terminal device 110 is a smartphone. A conventional smartphone simulates movements of a lens by making a plurality of material components on a plurality of layers in a canvas move simultaneously, and arrangements of the material components require multiple tests and are difficult to modify and maintain. In addition, the simultaneous movements of a lot of material components may degrade the performance of the smartphone and may cause screen stuttering when the processing is improperly handled.

By playing video clips, i.e., playing different video clips which simulate respective effects before, during and after a lens movement, various embodiments of this application present visual effects that a lens is moving. By providing a complete virtual scene using a video, resource consumption of the smartphone can be reduced, and screen stuttering can be avoided.

FIG. 6 is a flowchart illustrating a detailed step S430 of the embodiment as shown in FIG. 4B. Specifically, as shown in FIG. 6, the step S430 may include the following procedures.

At step S431, an enter instruction for entering a virtual scene function in an entry interface may be received, and a playing time attribute of an initial-location video clip indicated by the enter instruction may be dynamically configured according to an enter trigger time indicated by the enter instruction.

Specifically, the terminal device 110 may play a video through a video element of an HTML5 document. The video element provides video annotation methods. By setting a currentTime (current time) attribute of the video element, a specified playing position in a video may be configured and returned to. After receiving the enter instruction for entering the virtual scene function, the terminal device may call a program script to dynamically configure a playing time attribute of the initial-location video clip indicated by the enter instruction, that is, the currentTime attribute of the initial-location video clip. The program script may be called according to an enter trigger time indicated by the enter instruction to set the currentTime attribute of the initial-location video clip as the indicated entering trigger time.

At step S432, the initial-location video clip may be played according to a playing start time indicated by the playing time attribute.

After the playing time attribute of the initial-location video clip is configured, the initial-location video clip may be played on time according to the playing start time included in the playing time attribute. Likewise, to switch to playing the movement video clip, after the movement trigger instruction is received, the program script is called according to a time indicated by the movement trigger instruction to configure the playing time attribute of the movement video clip. To switch to playing the target-location video clip, the playing time attribute of the target-location video clip is configured according to a playing end time of the movement video clip, so that the target-location video clip starts to be played when the movement video clip is finished playing.

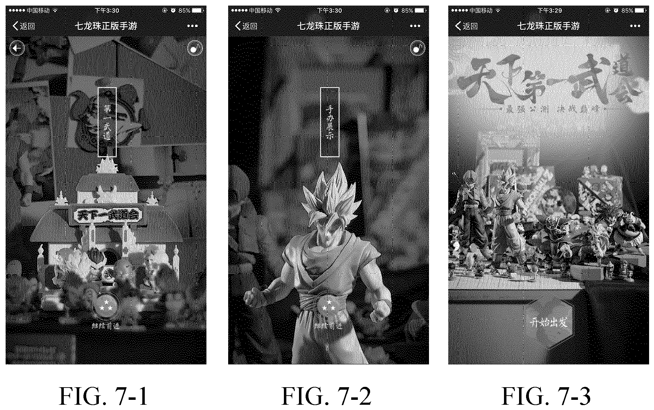

It should be noted that in the existing technology, a currentTime attribute of each image frame in a video is configured using a program script, and the currentTime attribute of each image frame progressively decreases to simulate a lens movement, as shown in FIG. 7-1, FIG. 7-2, and FIG. 7-3. This manner, which modifies the currentTime attribute of each image frame of video using the program script, may result in not only no sound during video playing but also unsmooth running and screen stuttering on a mobile phone device having modest performances. Embodiments of this application directly switches to playing a video clip without modifying the currentTime attribute of each image frame in the video when modifying a currentTime attribute of a video clip indicated by a trigger instruction after the trigger instruction is received. Therefore, viewing effects of simulating a lens movement can be achieved without muting the sounds of the video.

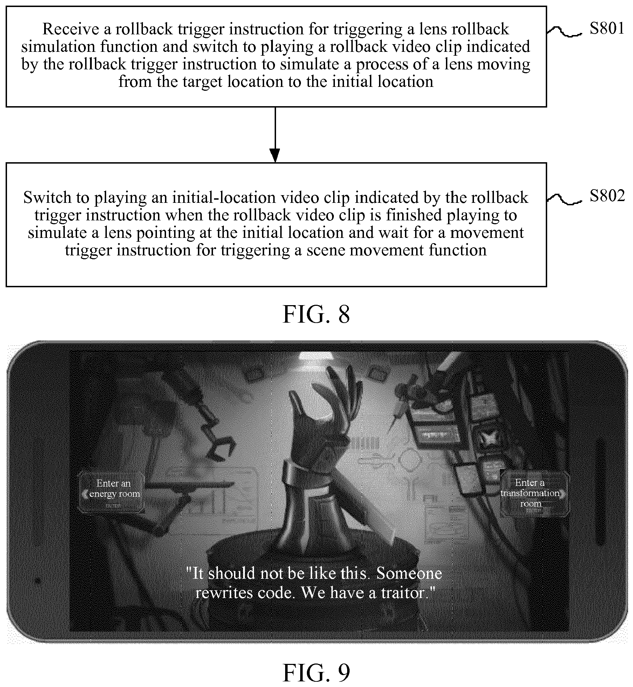

Further, as shown in FIG. 8, after switching to playing the target-location video clip indicated by the movement trigger instruction in step S470, the virtual scene display method for simulating lens movement of an embodiment of this application may also include the following procedures.

At step S801, a rollback trigger instruction for triggering a lens rollback simulation function is received, and switch to playing a rollback video clip indicated by the rollback trigger instruction to simulate a process of a lens moving from the target location to the initial location.

Specifically, a control key for triggering a lens rollback simulation function may be superimposed on a layer over the display interface of the target-location video clip. When the control key is clicked by the user, the terminal device may receive a rollback trigger instruction for triggering the lens rollback simulation function and then switch to playing a rollback video clip specified by the rollback trigger instruction. By playing the rollback video clip, visual effects simulating a lens moving from the target location to the initial location can be achieved.

The movement video clip and the rollback video clip are a reversed version of each other. That is, the first frame of the movement video clip is the last frame of the rollback video clip, and the first frame of the rollback video clip is the last frame of the movement video clip. A method of switching to playing the rollback video clip may include modifying the currentTime attribute of the rollback video clip by calling the program script.

At step S802, switch to playing an initial-location video clip indicated by the rollback trigger instruction when the rollback video clip is finished playing to simulating a lens pointing at the initial location and to wait for a movement trigger instruction for triggering a scene movement function.

When the rollback video clip is finished playing, it may be regarded that the lens has returned from the target location to the initial location. Therefore, return to playing the initial-position video clip can simulate the visual effects when the lens points at the initial location. During the initial-location video clip is played, a movement trigger instruction for triggering simulated scene movement function may be awaited to continue to perform the procedures in step S450 to step S470.

Further, after the target-location video clip indicated by the movement trigger instruction is switched to be played in step S470, the virtual scene display method for simulating lens movement of the embodiment of this application may also include:
determining whether there is a video clip corresponding to a next location, and repeatedly playing the target-location video clip to wait for receiving a trigger instruction for simulating the lens moving to the next location if there is a video clip corresponding to the next location.

It should be noted that during the target-location video clip is played, the terminal device 110 may determine whether there is a video clip corresponding to a next location, i.e.,, whether there is a need of simulating the lens moving to a next location. For example, after simulating the lens moving from area 1 (the initial location) to area 2 (the target location), it may be determined whether there is a video clip corresponding to area 3 (the next location). If there is a video clip corresponding to area 3, the video clip corresponding to area 2 may be repeatedly played to wait for receiving a trigger instruction for simulating the lens moving to area 3, and at the same time to wait for receiving a trigger instruction for simulating the lens rolling back to area 1. If the trigger instruction for moving to area 3 is received, switch to playing a movement video clip between area 2 and area 3, and then play a video clip corresponding to area 3. If the trigger instruction for rolling back to area 1 is received, return to playing the video clip corresponding to area 1 through the above step S801 to step S802.

Optionally, the procedure of determining whether there is a video clip corresponding to a next location may specifically include:
determining, according to a preset serial number sequence of different video clips and a serial number of the target-location video clip, whether there is a video clip with the next serial number.

Video clips corresponding to different areas may be numbered in advance according to movements between the scenes, for example, serial numbers 1, 2, 3, 4, to N, may be allocated to video clips respectively corresponding to an area having a serial number 1, a video clip corresponding to an area having a serial number 2, and so on. Assuming that the video clip corresponding to the area whose serial number is 2 is the target-location video clip, it may be determined according to a serial number sequence, whether there is a video clip corresponding to an area whose serial number is 3. If there is a video clip corresponding to area 3, the video clip is considered to be a video clip corresponding to the next location. A trigger instruction for simulating a lens moving to area 3 may be awaited to be received, and a trigger instruction for simulating the lens moving back to area 2 may be also awaited to be received according to the needs.

For example, FIG. 9 shows a form of the display interface of the target-location video clip. When there is a video clip corresponding to a next location, a scene leftward movement control button (such as the button "enter an energy room" in FIG. 9) and a scene rightward movement control button (such as the button "enter a transformation room" in FIG. 9) may be superimposed on a layer over the display interface of the target-location video clip. During repeated playing of the target-location video clip, a trigger instruction for triggering the scene leftward movement control button and a trigger instruction for triggering the scene rightward movement control button may be awaited to be received. The trigger instruction for simulating a lens moving to the next location may be the trigger instruction for triggering the scene rightward movement control button, and a rollback trigger instruction may be the trigger instruction for triggering the scene leftward movement control button.

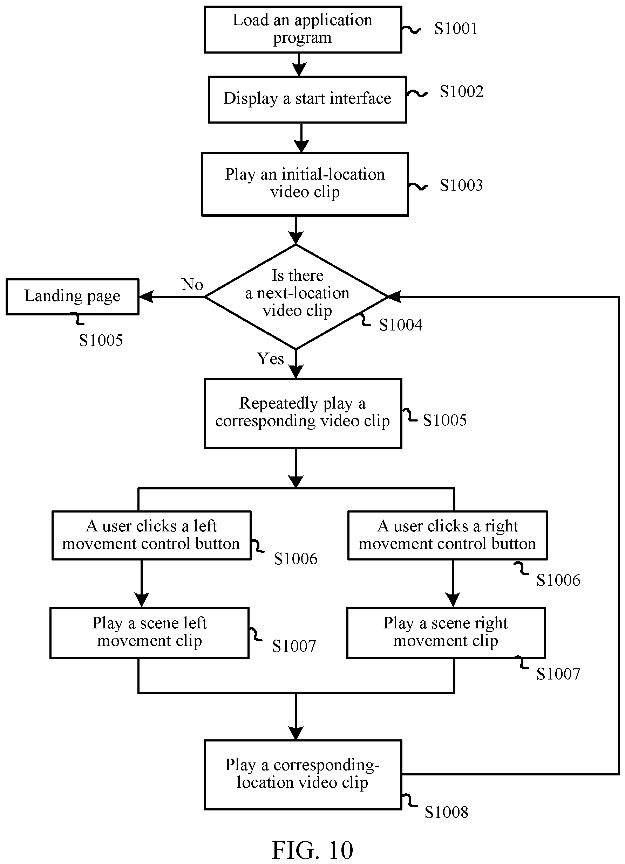

As shown in FIG. 10, a detailed process of a virtual scene display method for simulating a lens movement of an exemplary embodiment may be as follows.

At step S1001, an application program for loading and displaying a virtual scene may be triggered by a user.

At step S1002, a start interface (as shown in FIG. 5) may be displayed.

At step S1003, a user may click on a button "enter a lab ", and a terminal device may play an initial-location video clip after receiving a trigger instruction of the user for entering a virtual scene function of the start interface.

At step S1004, it may be determined whether there is a video clip corresponding to a next location.

At step S1005, a video clip may be repeatedly played if there is a video clip corresponding to a next location. If there is no video clip corresponding to a next location, a landing page may be displayed after the initial-location video clip is finished playing.

At step S1006, during repeated playing of the initial-location video clip, a trigger instruction for triggering a scene rightward movement control button may be received when the user clicks on a rightward movement control button. Receive a trigger instruction for triggering a scene left movement control button when the user clicks a leftward movement control button.

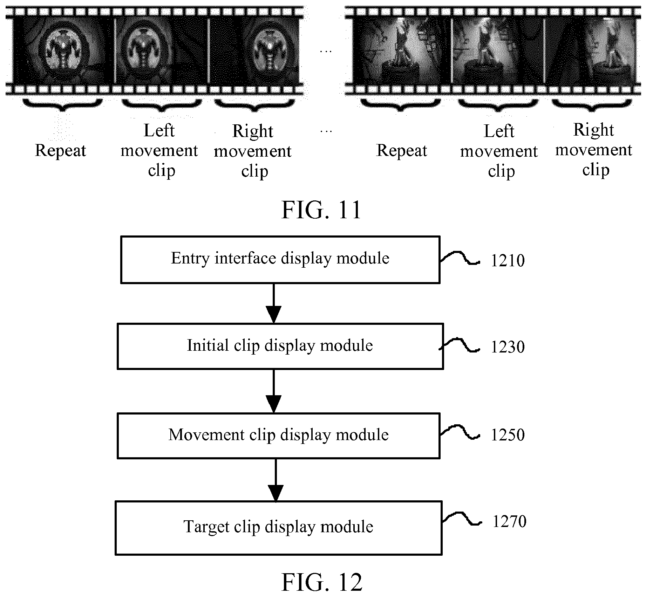

Step S1007: Play a scene rightward movement clip when the user clicks the rightward movement control button, or play a scene leftward movement clip when the user clicks on the leftward movement control button. As shown in FIG. 11, video segments represents video clips corresponding to different locations in the virtual scene, a video clip corresponding to a specified location may be repeatedly played, and a specified leftward movement video clip may be played when the user clicks on a leftward movement button, and a specified rightward movement video clip may be played when the user clicks a rightward movement button.

At step S1008, a video clip corresponding to a location after a scene rightward movement or a scene leftward movement may be played when the scene rightward movement clip or the leftward movement clip is finished playing.

It may be continued to determine whether there is a video clip corresponding to a next location. If there is a video clip corresponding to a next location, the video clip corresponding to the location after the scene rightward movement or a scene leftward movement in step S1008 may be repeatedly played to wait for the user to trigger the leftward movement control button or the rightward movement control button.

In view of the foregoing, the technical mechanism of various embodiments of this application can simulate the lens moving in the virtual scene, to make the animation scene present a visual effect of reversed playing. By playing video clips in different phases to simulate lens movement, a high image quality can be ensured while retaining the original sounds of the video. This technique has a low performance requirements for intelligent devices such as mobile phones. Under favorable network conditions, screen stuttering can be avoided, satisfying visual experiences simulating lens movement, page turning, scrolling, and reverse playing can be presented to users.

The following is an apparatus embodiment of this application. The apparatus may be configured to perform the embodiments of the virtual scene display method simulating lens movement performed by the terminal device 110 of the embodiments of this application. Please refer to the virtual scene display method for simulating lens movement of various embodiments of this application for details omitted in the apparatus embodiments of this application.

FIG. 12 is a block diagram illustrating a virtual scene display apparatus for simulating lens movement according to an embodiment. The virtual scene display apparatus for simulating lens movement may be used in a terminal device 110 in an implementation environment as shown in FIG. 2 to perform all or some of steps of a virtual scene display method for simulating lens movement as shown in any one of FIG. 4B, FIG. 6, FIG. 8, and FIG. 10. As shown in FIG. 12, the apparatus may include, but not limited to: an entry interface display module 1210, an initial clip display module 1230, a movement clip display module 1250, and a target clip display module 1270.

The entry interface display module 1210 is configured to receive a trigger instruction for displaying a virtual scene, and display a virtual scene entry interface.

The initial clip display module 1230 is configured to receive an enter instruction for entering a virtual scene function in the entry interface, and play an initial-location video clip indicated by the enter instruction to simulate lens pointing at an initial location.

The movement clip display module 1250 is configured to receive a movement trigger instruction for triggering a lens movement simulation function, and switch to playing a movement video clip indicated by the movement trigger instruction to simulate a process of a lens moving from the initial location to a target location.

The target clip display module 1270 is configured to switch to playing a target-location video clip indicated by the movement trigger instruction when the movement video clip is finished playing to simulate the lens pointing at the target location.

Detailed implementation processes of functions and actions of the modules of the foregoing apparatus can be found in the foregoing implementation processes of corresponding steps in the virtual scene display method for simulating lens movement, thus are not repeated herein.

The entry interface display module 1210 may be, for example, a multimedia component 208 having a physical structure in FIG. 3.

The initial clip display module 1230, the movement clip display module 1250, and the target clip display module 1270 may be functional modules configured to perform corresponding steps in the virtual scene display method for simulating lens movement. It may be understood that these modules may be implemented through hardware, software, or a combination thereof. When implemented through hardware, these modules may be implemented as one or more hardware modules, for example, one or more application specific integrated circuits. When implemented through software, these modules may be implemented as one or more computer programs executable by one or more processors, for example, as a program executable by the processor 218 of FIG. 3 and stored in the memory 204.

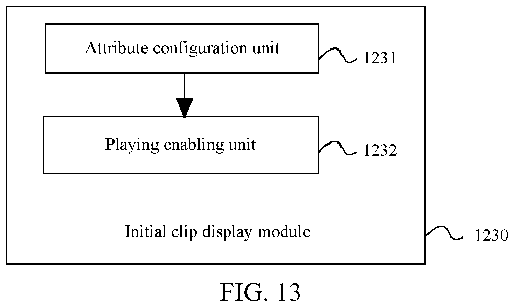

FIG. 13 is a detailed block diagram of an initial clip display module 1230 in an embodiment as shown in FIG. 12. As shown in FIG. 13, the initial clip display module 1230 may include but not limited to:
an attribute configuration unit 1231, configured to receive an enter instruction of entering a virtual scene function in an entry interface, and dynamically configure, according to an entering trigger time indicated by the enter instruction, a playing time attribute of an initial-location video clip indicated by the enter instruction; and
a playing enabling unit 1232, configured to play the initial-location video clip according to a playing start time indicated by the playing time attribute.

Further, based on the foregoing embodiments, the virtual scene display apparatus for simulating lens movement may further include but not limited to:
a rollback clip displaying module, configured to receive a rollback trigger instruction of simulating a lens rollback function, and switch to playing a rollback video clip indicated by the rollback trigger instruction to simulate a process of a lens moving from the target location to the initial location; and
a rollback initial displaying module, configured to switch to playing the initial-location video clip indicated by the rollback trigger instruction when the rollback video clip is finished playing to simulate the lens pointing at the initial location and wait for a movement trigger instruction for triggering a scene movement function.

Further, based on the foregoing embodiments, the virtual scene display apparatus for simulating lens movement may further include but not limited to:
a video clip determining module, configured to determine whether there is a video clip corresponding to a next location, and repeatedly play the target-location video clip to wait for a trigger instruction for simulating a lens moving to the next location if there is a video clip corresponding to the next-location.

Further, based on the foregoing embodiments, the video clip determining module may include:
a serial number determining unit, configured to determine, according to a preset serial number sequence of different video clips and a serial number of the target-location video clip, whether there is a video clip with the next serial number.

Optionally, an embodiment of this application further provides an electronic device. The electronic device may be used in the terminal device 110 in the implementation environment as shown in FIG. 2 to perform all or some of steps of the virtual scene display method for simulating lens movement shown in any one of FIG. 4B, FIG. 6, FIG. 8, and FIG. 10. The electronic device may include:
a processor;
a memory storing instructions executable by a processor,
the processor is configured to perform the virtual scene display method for simulating lens movement in the foregoing embodiments.

Detailed methods of the processor in the apparatus performs operations in this embodiment have been described in detail in embodiments related to the virtual scene display method for simulating lens movement, thus are not described in detail herein.

In an exemplary embodiment, a storage medium is further provided. The storage medium is a computer-readable storage medium. For example, the storage medium may be a transitory or non-transitory computer-readable storage medium including instructions. The storage medium stores a computer program. The computer program may be executed by the processor 218 to perform the virtual scene display method for simulating lens movement in the foregoing embodiments.

It should be understood that the present disclosure is not limited to the precise structures described above and shown in the accompanying drawings, and various modifications and changes can be made without departing from the scope of the present disclosure. The scope of the present disclosure is limited only by the appended claims.

## Claims

1. A virtual scene display method, applicable to a terminal device, the method comprising:
obtaining animation data and video data;
displaying an animation interface corresponding to the animation data in an animation display area of a display interface, the animation interface comprises a first virtual scene composed of a plurality of animation elements; and
playing a video clip in the video data in response to an operation on an animation element of the animation elements in the animation interface, the video clip comprises images depicting a transition from the first virtual scene to a second virtual scene.

2. The method according to claim 1, wherein playing a video clip in the video data comprises:
obtaining a preset video clip position corresponding to the operation; and
playing the video clip which is corresponding to the video clip position in the video data.

3. The method according to claim 2, wherein the video clip position comprises a start time of the video clip in the video data;
wherein playing the video clip which is corresponding to the video clip position in the video data comprises:
setting a time attribute of a video element in the display interface to be the start time to have the video element play a video clip at a position corresponding to the start time in the video data.

4. The method according to claim 3, wherein the animation display area is provided by a Canvas element of HTML5, and the video element is a Video element of HTML5.

5. The method according to claim 1, wherein the video data comprises a plurality of video clips; and
the method further comprises:
playing a second video clip corresponding to the second virtual scene in the video data and displaying an interactive element superimposed on a display area of the second video clip; and
playing a third video clip corresponding to the interactive element in the video data in response to an operation on the interactive element.

6. The method according to claim 5, wherein
playing the second video clip again and displaying the superimposed interactive element when the second video clip is finished playing in response to a determination that the operation is not detected.

7. A virtual scene display apparatus, comprising a processor and a memory, the memory storing computer-readable instructions executable by the processor to:
obtain animation data and video data;
display an animation interface corresponding to the animation data in an animation display area of a display interface, the animation interface comprises a first virtual scene composed of a plurality of animation elements; and
play a video clip in the video data in response to an operation on an animation element of the animation elements in the animation interface, the video clip comprises images depicting a transition from the first virtual scene to a second virtual scene.

8. The apparatus according to claim 7, wherein the instructions are executable by the processor to:
obtain a preset video clip position corresponding to the operation; and
play the video clip which is corresponding to the video clip position in the video data.

9. The apparatus according to claim 8, wherein the instructions are executable by the processor to:
obtain a start time of the video clip in the video data using the video clip position; and
set a time attribute of a video element in the display interface to be the start time to have the video element play a video clip at a position corresponding to the start time in the video data.

10. The apparatus according to claim 9, wherein the instructions are executable by the processor to:
provide the animation display area using a Canvas element of HTML5; and
provide the video element using a Video element of HTML5.

11. The apparatus according to claim 7, wherein the video data comprises a plurality of video clips, and the instructions are executable by the processor to:
play a second video clip corresponding to the second virtual scene in the video data and display an interactive element superimposed on a display area of the second video clip; and
play a third video clip corresponding to the interactive element in the video data in response to an operation on the interactive element.

12. The apparatus according to claim 11, wherein the video data comprises a plurality of video clips, and the instructions are executable by the processor to:
play the second video clip again and display the superimposed interactive element when the second video clip is finished playing in response a determination that the operation is not detected.

13. A computer-readable storage medium, storing a computer program, and the computer program is executable by a processor to implement the virtual scene display method according to any one of claims 1 to 6.
